# EUROPEAN PATENT APPLICATION

(11) **EP 4 711 152 A1**
(43) Date of publication of application: **18.03.2026**
(21) Application number: 25195651.2
(22) Date of filing: 13.08.2025
(51) Int. Cl.: B60C 9/00, B60C 9/18, B60C 9/20, B60C 9/28, B60C 11/00, B60C 11/04, B60C 19/08, B60C 11/03

(54) **HEAVY DUTY TIRE**

(30) Priority: 13.09.2024 JP 2024158789
(71) Applicant: Sumitomo Rubber Industries, Ltd., Kobe-shi, Hyogo 651-0072 (JP)
(72) Inventor: KAGIMOTO, Shuji, Kobe-shi, 651-0072 (JP)
(74) Representative: Manitz Finsterwald Patent- und Rechtsanwaltspartnerschaft mbB

(57) **Abstract**

Provided is a heavy duty tire 2 that can suppress accumulation of static electricity while maintaining uneven wear resistance. The tire 2 includes a reinforcement layer 14 and a tread 4. The tread 4 includes a cap layer 30 and a conducting portion 36. The tread 4 includes at least four land portions 52. The at least four land portions 52 include two shoulder land portions 54 and a plurality of main land portions 56. At least one of the plurality of main land portions 56 includes the conducting portion 36. The reinforcement layer 14 includes a plurality of belt plies 64 and a full band 70 aligned in a radial direction. Each belt ply 64 includes belt cords 66. A material of each belt cord 66 is steel. The full band 70 includes a helically wound band cord 72. A material of the band cord 72 is steel.

## Description

### BACKGROUND OF THE INVENTION

### Field of the Invention

The present invention relates to a heavy duty tire.

### Background Art

Environmental impact is being taken into consideration, and there is a strong need for tires to reduce rolling resistance.

In order to reduce rolling resistance, the application of a crosslinked rubber that has low heat generation properties to a tread is being considered. The crosslinked rubber that has low heat generation properties contains a large amount of silica. A tread formed from the crosslinked rubber that has low heat generation properties has electrical resistance higher than the electrical resistance of a tread formed from a crosslinked rubber that contains a large amount of carbon black.

A tire comes into contact with a road surface at a tread thereof. When the tread is formed from the crosslinked rubber that has low heat generation properties, there is a concern that static electricity may accumulate in a vehicle. Therefore, for example, as described in Japanese Laid-Open Patent Publication (translation of PCT application) No. 2006-502909, a conducting bridge (hereinafter referred to as conducting portion) formed from an electrically conductive crosslinked rubber is provided in a tread.

An object of the present invention is to provide a heavy duty tire that can suppress accumulation of static electricity while maintaining uneven wear resistance.

### SUMMARY OF THE INVENTION

A heavy duty tire according to the present invention includes: a pair of beads; a carcass extending on and between the pair of beads; a reinforcement layer located radially outward of the carcass; and a tread covering the reinforcement layer from a radially outer side of the reinforcement layer. The tread includes a cap layer configured to come into contact with a road surface and a conducting portion extending in a radial direction through the cap layer and configured to connect the road surface and the reinforcement layer. The tread has at least three circumferential grooves extending continuously in a circumferential direction. The at least three circumferential grooves demarcate at least four land portions aligned in an axial direction, in the tread. The at least four land portions include two shoulder land portions located on outermost sides in the axial direction and a plurality of main land portions located between the two shoulder land portions. At least one main land portion among the plurality of main land portions includes the conducting portion. The reinforcement layer includes a belt including a plurality of belt plies and a band including a full band. The plurality of belt plies and the full band are aligned in the radial direction. Each of the plurality of belt plies includes a large number of belt cords aligned with each other. A material of each of the belt cords is steel. The full band includes a helically wound band cord. A material of the band cord is steel.

According to the present invention, a heavy duty tire that can suppress accumulation of static electricity while maintaining uneven wear resistance is obtained. The heavy duty tire of the present invention can achieve reduction of rolling resistance.

### BRIEF DESCRIPTION OF THE DRAWINGS

FIG. 1 is a cross-sectional view showing a part of a heavy duty tire according to an embodiment of the present invention;
FIG. 2 is a cross-sectional view showing a tread portion of the tire in FIG. 1;
FIG. 3 is a cross-sectional view showing a part of the tread portion in FIG. 2;
FIG. 4 is a schematic diagram for describing the configuration of a reinforcement layer;
FIG. 5 is a cross-sectional view showing a part of a heavy duty tire according to another embodiment of the present invention;
FIG. 6 is a cross-sectional view showing a modification of a circumferential groove;
FIG. 7 is a cross-sectional view showing a modification of a circumferential narrow groove; and
FIG. 8 is a schematic diagram illustrating a device for measuring the electrical resistance of a tire.

### DETAILED DESCRIPTION

Hereinafter, the present invention will be described in detail based on preferred embodiments with appropriate reference to the drawings.

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a crosslinked rubber is a crosslinked product, of a rubber composition, which is obtained by pressurizing and heating the rubber composition. The rubber composition is a material obtained by mixing a rubber component and chemicals in a kneading machine such as a Banbury mixer.

Examples of the rubber component include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a raw material rubber component and chemicals, the amounts of the selected chemicals, etc., are determined as appropriate according to the specifications of components, such as a tread and a sidewall, for which the rubber composition is used.

In the present invention, an electrically conductive crosslinked rubber means a crosslinked rubber having a volume resistivity of less than 1.0 × 10⁸ Ω·cm. An electrically non-conductive crosslinked rubber means a crosslinked rubber having a volume resistivity of 1.0 × 10⁸ Ω·cm or more. The electrical conductivity of a crosslinked rubber is controlled, for example, based on the content of carbon black. The volume resistivity of a crosslinked rubber is measured, for example, in accordance with the Guarded-electrode system specified in JIS K6271.

In the present invention, the number of cords included per 50 mm width of a tire component including aligned cords is represented as cord ends (unit: ends/50 mm). Unless otherwise specified, the cord ends are obtained in a cross-section of the component obtained by cutting the component along a plane perpendicular to the longitudinal direction of the cords. Also, in a component including a helically wound cord, it is apparent that a plurality of cords are aligned, and thus cord ends are obtained in the same manner as the tire component including aligned cords.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

In the present invention, the tire having good electrical conduction performance means that the electrical resistance of the tire is 10⁸ Ω or lower.

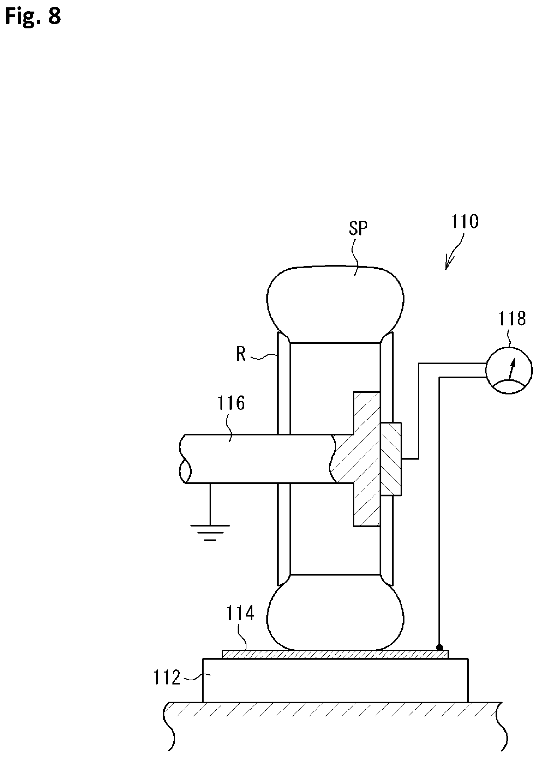

The electrical resistance of the tire is measured, for example, as follows. In this electrical resistance measurement, a measurement device 110 having a configuration shown in FIG. 8 is used.

The measurement device 110 includes an insulating plate 112, a metal plate 114, a tire mounting shaft 116, and an electrical resistance measuring instrument 118. The electrical resistance value of the insulating plate 112 is 10¹² Ω or higher. The metal plate 114 is installed on the insulating plate 112. The surface of the metal plate 114 is polished, and the electrical resistance value of the metal plate 114 is 10 Ω or lower. A tire-rim assembly is held on the tire mounting shaft 116. Using the measurement device 110, the electrical resistance of the tire-rim assembly, that is, the tire, is measured as indicated below.

The procedure for measuring the electrical resistance of the tire is as follows.
(1) Thoroughly remove a release agent and dirt adhering to the surface of a test tire SP. After removal, thoroughly dry the tire SP.
(2) Mount the test tire SP on a rim R to prepare a tire-rim assembly. At this time, soap water is used as a lubricant at the contact portion between the test tire SP and the rim R.
(3) After leaving the tire-rim assembly in a test room for 2 hours, mount the tire-rim assembly on the tire mounting shaft 116.
(4) Apply a load to the tire-rim assembly for 0.5 minutes and release the tire-rim assembly from this load. Then, further apply a load to the tire-rim assembly for 0.5 minutes and release the tire-rim assembly from this load. Then, further apply a load to the tire-rim assembly for 2 minutes and release the tire-rim assembly from this load.
(5) Apply a test voltage, and after 5 minutes have elapsed, measure the electrical resistance between the tire mounting shaft 116 and the metal plate 114 using the electrical resistance measuring instrument 118. The measurement is performed at 90° intervals (four locations) in the circumferential direction of the tire SP. The maximum value is used as the measured value of the electrical resistance of the tire SP.

Other conditions for the measurement are as follows. The rim size, internal pressure, and load are set in accordance with JATMA standards, based on the tire to be measured.
· Rim material: Aluminum alloy
· Test environment temperature (test room temperature): 25°C
· Humidity: 50%
· Measurement range of electrical resistance measuring instrument 118: 1.0 × 10³ to 1.6 × 10¹⁶ Ω
· Test voltage (applied voltage): 1000 V

### [Findings on Which Present Invention Is Based]

The application of a crosslinked rubber that has low heat generation properties to a tread is being considered not only for tires for a passenger car but also for heavy duty tires in order to reduce rolling resistance. When applying a crosslinked rubber that has low heat generation properties to a tread, the above-described conducting portion is provided in the tread in order to suppress accumulation of static electricity in a vehicle.

The conducting portion is unique in the tread. When the conducting portion is provided in the tread, there is a concern that the conducting portion may become a starting point for uneven wear or cracks.

When a heavy duty tire is mounted on the steering axle of a vehicle, uneven wear is more likely to occur at each shoulder portion of the tire than at a crown portion of the tire. In the case of a heavy duty tire, in consideration of uneven wear resistance, it is considered to provide a conducting portion in a middle land portion or a crown land portion formed in a crown portion, not in a shoulder land portion formed in a shoulder portion.

Meanwhile, the ground-contact pressure of a tire tends to be higher at a crown portion when the tire is new. Even if a conducting portion is provided in the crown portion in order to reduce the risk of occurrence of uneven wear at each shoulder portion, there is a risk that the conducting portion may become a starting point for uneven wear.

Therefore, the present inventor has investigated the cause of an increase in the ground-contact pressure at a crown portion of a tire when the tire is new, in order to obtain a heavy duty tire that can suppress accumulation of static electricity while maintaining uneven wear resistance. As a result, the present inventor has found that when a tire is new, the ground-contact shape of the tire has a rounded shape, resulting in a state where the ground-contact pressure at a crown portion is likely to increase, and thus has completed the present invention described below.

### [Outline of Embodiments of Present Invention]

The present invention is directed to a heavy duty tire including: a pair of beads; a carcass extending on and between the pair of beads; a reinforcement layer located radially outward of the carcass; and a tread covering the reinforcement layer from a radially outer side of the reinforcement layer, wherein the tread includes a cap layer configured to come into contact with a road surface and a conducting portion extending in a radial direction through the cap layer and configured to connect the road surface and the reinforcement layer, the tread has at least three circumferential grooves extending continuously in a circumferential direction, the at least three circumferential grooves demarcate at least four land portions aligned in an axial direction, in the tread, the at least four land portions include two shoulder land portions located on outermost sides in the axial direction and a plurality of main land portions located between the two shoulder land portions, at least one main land portion among the plurality of main land portions includes the conducting portion, the reinforcement layer includes a belt including a plurality of belt plies and a band including a full band, the plurality of belt plies and the full band are aligned in the radial direction, each of the plurality of belt plies includes a large number of belt cords aligned with each other, a material of each of the belt cords is steel, the full band includes a helically wound band cord, and a material of the band cord is steel.

The heavy duty tire of the present invention can suppress accumulation of static electricity while maintaining uneven wear resistance. The mechanism by which this effect is achieved has not been clarified but is inferred as follows.

The conducting portion connecting the road surface and the reinforcement layer can contribute to discharging static electricity to a road surface. In the tire, static electricity that is accumulated in a tire in which no conducting portion is provided is effectively discharged to a road surface. The tire has good electrical conduction performance. The tire can suppress accumulation of static electricity.

The conducting portion is not provided in the two shoulder land portions located on the outermost sides in the axial direction but is provided in the main land portion located between the two shoulder land portions. Accordingly, an increase in the risk of occurrence of uneven wear is prevented.

The reinforcement layer is located between the tread and the carcass, and the reinforcement layer includes the full band. The full band includes the helically wound band cord. The full band restricts the tire from moving so as to expand outward. Since the band cord is a steel cord, this movement is effectively suppressed. The ground-contact shape of the tire when the tire is new is configured as a rectangular shape rather than a round shape. In the tire, the ground-contact pressure at the crown portion is less likely to increase as compared to a tire in which no full band is provided. Since a shape change of the tire due to running is suppressed, the rectangular ground-contact shape is maintained. The tire can maintain a state where the ground-contact pressure at the crown portion is less likely to increase, even when worn. The conducting portion provided in the main land portion is less likely to become a starting point for uneven wear.

The uneven wear resistance of the tire is improved compared to a conventional tire in which a conducting portion is provided in a crown portion. The tire can maintain good uneven wear resistance. The tire can suppress accumulation of static electricity while maintaining uneven wear resistance. Even though the cap layer of the tread is formed from a crosslinked rubber that has low heat generation properties, the conducting portion can stably exhibit its function. The tire can achieve reduction of rolling resistance.

Preferably, a ratio of a width in the axial direction of the full band to a width of the tread is 0.60 or more. In this case, the full band can effectively contribute to suppressing an increase in the ground-contact pressure at the crown portion. The tire can suppress accumulation of static electricity while maintaining uneven wear resistance.

Preferably, cord ends of the full band are 20 ends/50 mm or more. In this case, the full band can effectively contribute to suppressing an increase in the ground-contact pressure at the crown portion. The tire can suppress accumulation of static electricity while maintaining uneven wear resistance.

Preferably, the conducting portion has a width of 8.0 mm or less. **In** this case, occurrence of wear at the conducting portion is suppressed. The tire can suppress accumulation of static electricity while maintaining uneven wear resistance.

Preferably, the plurality of belt plies include a reference belt ply and a sub-reference belt ply, the reference belt ply is a belt ply having a widest width in the axial direction among the plurality of belt plies, the sub-reference belt ply is a belt ply having a next widest width in the axial direction after the reference belt ply among the plurality of belt plies, a direction of inclination of the belt cords included in the sub-reference belt ply is opposite to a direction of inclination of the belt cords included in the reference belt ply, and the full band is located between the reference belt ply and the sub-reference belt ply. In this case, the full band is sufficiently protected from external damage. The full band can stably exhibit its function. The tire can suppress accumulation of static electricity while maintaining uneven wear resistance.

Preferably, only one main land portion among the plurality of main land portions includes the conducting portion. In this case, the tire can suppress accumulation of static electricity while maintaining uneven wear resistance.

Preferably, a main land portion located on an equator plane, or a main land portion closest to the equator plane, among the plurality of main land portions, is a crown land portion; when the tread has three or more main land portions, the main land portions located adjacent to the crown land portion are middle land portions; and a main land portion in which the conducting portion is provided is the crown land portion or any one of the middle land portions. In this case, the tire can suppress accumulation of static electricity while maintaining uneven wear resistance.

Preferably, the heavy duty tire further includes a strip layer formed from a crosslinked rubber, between the carcass and the reinforcement layer, and the strip layer has a width in the axial direction that is substantially the same as the width in the axial direction of the full band. In this case, occurrence of damage between the carcass and the reinforcement layer is suppressed, and thus the full band can stably exhibit its function. The tire can suppress accumulation of static electricity while maintaining uneven wear resistance.

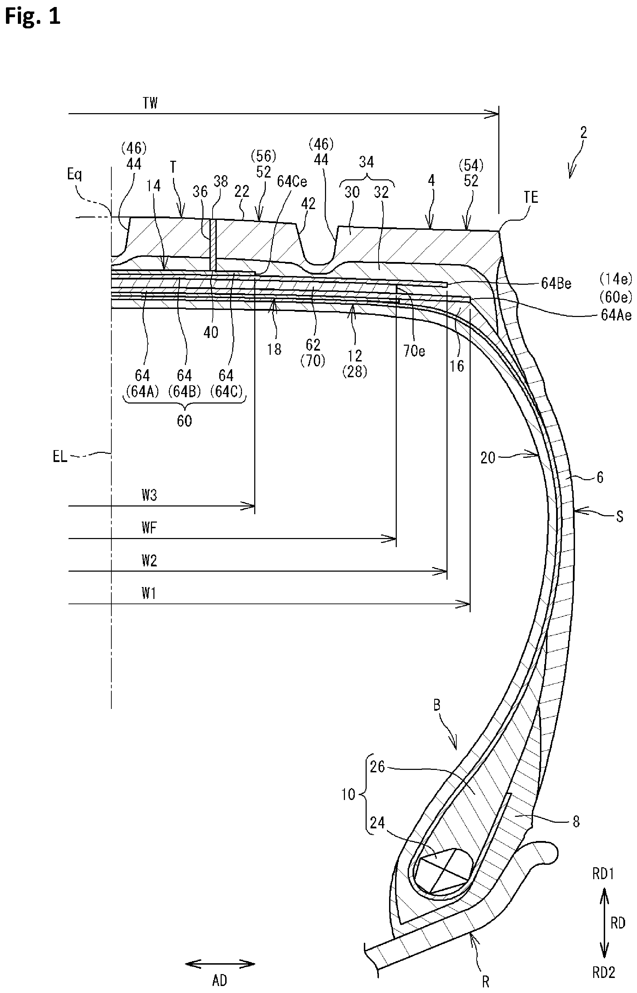

As described above, according to the present invention, a heavy duty tire that can suppress accumulation of static electricity while maintaining uneven wear resistance is obtained. This will be described in detail below with a heavy duty tire 2 shown in FIG. 1 as an example.

### [Details of Embodiments of Present Invention]

FIG. 1 shows a part of a heavy duty tire 2 according to an embodiment of the present invention. The tire 2 is mounted to a vehicle such as a truck or a bus. The tire 2 shown in FIG. 1 is fitted on a rim R. The rim R is a standardized rim.

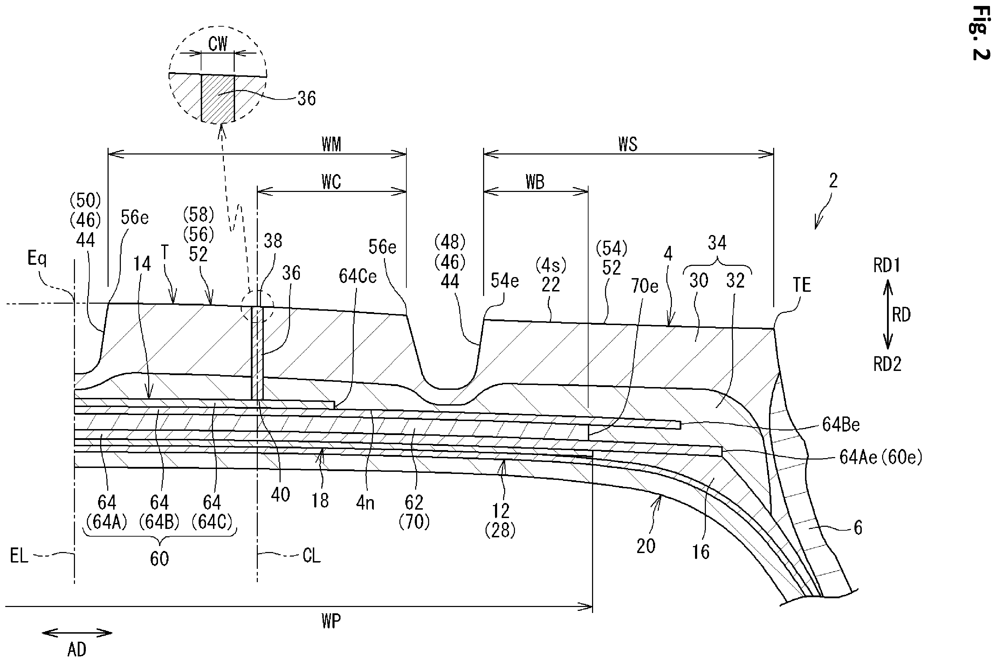

FIG. 1 shows a part of a cross-section (hereinafter referred to as meridian cross-section) of the tire 2 along a plane including the rotation axis of the tire 2. FIG. 2 shows a part of the cross-section shown in FIG. 1. FIG. 2 shows a tread portion T of the tire 2. A direction indicated by a double-headed arrow AD is the axial direction of the tire 2. The axial direction of the tire 2 means a direction parallel to the rotation axis of the tire 2. A direction indicated by a double-headed arrow RD is the radial direction of the tire 2. A direction perpendicular to the surface of the drawing sheet of FIG. 1 is the circumferential direction of the tire 2. An alternate long and short dash line EL extending in the radial direction represents the equator plane of the tire 2.

In the axial direction, a direction away from the equator plane EL corresponds to the axially outer side of the tire 2, and a direction approaching the equator plane EL corresponds to the axially inner side of the tire 2. A direction indicated by an arrow RD1 corresponds to the radially outer side of the tire 2, and a direction indicated by an arrow RD2 corresponds to the radially inner side of the tire 2.

The tire 2 includes a tread 4, a pair of sidewalls 6, a pair of chafers 8, a pair of beads 10, a carcass 12, a reinforcement layer 14, a pair of cushion layers 16, a strip layer 18, and an inner liner 20.

The internal structure of the tire 2 is symmetrical with respect to the equator plane EL except for a conducting portion described later.

The tread 4 is located radially outward of the carcass 12. The tread 4 has a tread surface 22. The tire 2 comes into contact with a road surface at the tread surface 22. The tread surface 22 forms a part of an outer circumferential surface 4s of the tread 4.

The tread 4 is located radially outward of the reinforcement layer 14. The tread 4 covers the reinforcement layer 14 from the radially outer side of the reinforcement layer 14. The tread 4 is stacked on the reinforcement layer 14. The tread 4 is in contact with the reinforcement layer 14 at an inner circumferential surface 4n thereof.

A position indicated by reference character Eq is the equator of the tire 2. The equator Eq is the intersection of the tread surface 22 and the equator plane EL. In the case where a groove described later is located on the equator plane EL as in the tire 2, the equator Eq is specified based on a virtual tread surface obtained on the assumption that no groove is present on the equator plane EL.

A position indicated by reference character TE is an end of the tread surface 22. In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

In FIG. 1, a length indicated by a double-headed arrow TW is the width of the tread 4. The width TW of the tread 4 is the distance in the axial direction from one end TE to another end TE of the tread surface 22.

Each sidewall 6 is connected to an end of the tread 4. The sidewall 6 is located axially outward of the carcass 12. The sidewall 6 is formed from an electrically conductive crosslinked rubber. The sidewall 6 may be formed from an electrically non-conductive crosslinked rubber.

Each chafer 8 is located radially inward of the sidewall 6. The chafer 8 comes into contact with the rim R. The chafer 8 is formed from an electrically conductive crosslinked rubber.

Each bead 10 is located axially inward of the chafer 8. The bead 10 is located radially inward of the sidewall 6. The bead 10 includes a core 24 and an apex 26. Although not shown, the core 24 includes a wire made of steel and wound in the circumferential direction. The apex 26 is located radially outward of the core 24. The apex 26 is formed from an electrically conductive crosslinked rubber. The bead 10 is electrically conductive.

The apex 26 is tapered. The apex 26 is hard. The apex 26 may be composed of a hard inner apex and a soft outer apex. In this case, the inner apex is located radially outward of the core 24, and the outer apex is located radially outward of the inner apex.

The carcass 12 is located inward of the tread 4, the pair of sidewalls 6, and the pair of chafers 8. The carcass 12 extends on and between the pair of beads 10.

The carcass 12 includes at least one carcass ply 28. The carcass 12 of the tire 2 is composed of one carcass ply 28. The carcass ply 28 is turned up from the inner side toward the outer side in the axial direction at each bead 10.

The carcass ply 28 includes a large number of carcass cords aligned with each other, which are not shown. These carcass cords are covered with a topping rubber and intersect the equator plane EL. The carcass 12 has a radial structure. The material of the carcass cords is steel. In other words, the carcass cords are steel cords. The topping rubber is composed of an electrically conductive crosslinked rubber. The carcass ply 28, that is, the carcass 12, is electrically conductive.

The reinforcement layer 14 is located radially outward of the carcass 12. The reinforcement layer 14 is located between the tread 4 and the carcass 12 in the radial direction. As described above, the reinforcement layer 14 is covered with the tread 4.

Each cushion layer 16 is located between the reinforcement layer 14 and the carcass 12 at an end of the reinforcement layer 14 (specifically, the belt described later). The cushion layer 16 is formed from a soft crosslinked rubber. The cushion layer 16 is electrically conductive.

The strip layer 18 is located between the carcass 12 and the reinforcement layer 14 on the radially inner side of the tread 4. The strip layer 18 is stacked on the carcass 12, and the reinforcement layer 14 is stacked on the strip layer 18. The strip layer 18 is located between one cushion layer 16 and the other cushion layer 16 in the axial direction. The strip layer 18 is formed from an electrically conductive crosslinked rubber. In the case where the strip layer 18 is not provided, the reinforcement layer 14 is stacked on the carcass 12.

The inner liner 20 is located inward of the carcass 12. The inner liner 20 forms an inner surface of the tire 2. The inner liner 20 is formed from a crosslinked rubber that has an excellent air blocking property. The inner liner 20 maintains the internal pressure of the tire 2.

The tread 4 of the tire 2 includes a cap layer 30 and a base layer 32.

The cap layer 30 has the above-described tread surface 22. The cap layer 30 comes into contact with a road surface. The cap layer 30 is formed from a crosslinked rubber for which wear resistance and grip performance are taken into consideration. The cap layer 30 may be formed from a crosslinked rubber for which not only wear resistance and grip performance but also low heat generation properties are taken into consideration. The crosslinked rubber for which low heat generation properties are taken into consideration contains silica. In the case where the content of silica is high, the cap layer 30 is formed from an electrically non-conductive crosslinked rubber.

The base layer 32 is located radially inward of the cap layer 30. The cap layer 30 and the base layer 32 are aligned in the radial direction. The entirety of the base layer 32 is covered with the cap layer 30. The base layer 32 is formed from a crosslinked rubber for which low heat generation properties are taken into consideration. In the case where the content of silica is high, the base layer 32 is also formed from an electrically non-conductive crosslinked rubber.

In the tread portion T of the tire 2, a portion composed of the cap layer 30 and the base layer 32 is a main body 34 of the tread 4.

The tread 4 of the tire 2 further includes a conducting portion 36 in addition to the main body 34. The conducting portion 36 extends in the radial direction through the main body 34, specifically the cap layer 30 and the base layer 32. The conducting portion 36 extends straight from a radially outer end surface (hereinafter referred to as first end surface 38) toward a radially inner end surface (hereinafter referred to as second end surface 40). The conducting portion 36 has a uniform width in the meridian cross-section of the tire 2.

The first end surface 38 of the conducting portion 36 forms a part of the outer circumferential surface 4s (specifically, the tread surface 22). The second end surface 40 of the conducting portion 36 forms a part of the inner circumferential surface 4n of the tread 4. The conducting portion 36 extends between the tread surface 22 and the inner circumferential surface 4n. As described above, the tread 4 comes into contact with a road surface at the tread surface 22 and is in contact with the reinforcement layer 14 at the inner circumferential surface 4n. The conducting portion 36 connects the road surface and the reinforcement layer 14. The tread 4 of the tire 2 includes the cap layer 30 that comes into contact with a road surface and the conducting portion 36 that extends in the radial direction through the cap layer 30 and connects the road surface and the reinforcement layer 14.

The conducting portion 36 extends continuously in the circumferential direction. Although not shown, the conducting portion 36 may be formed by arranging a plurality of conducting elements at predetermined intervals in the circumferential direction. In this case, the conducting portion 36 extends intermittently in the circumferential direction.

The conducting portion 36 is formed from an electrically conductive crosslinked rubber. When the conducting portion 36 comes into contact with a road surface, the road surface and the reinforcement layer 14 are electrically connected.

On the tread 4, grooves 42 are formed. Accordingly, a tread pattern is formed. The tread 4 has the tread pattern.

The tread 4 of the tire 2 has at least three circumferential grooves 44. Each circumferential groove 44 extends continuously in the circumferential direction. The circumferential groove 44 is not a sipe having a groove width less than 1.0 mm.

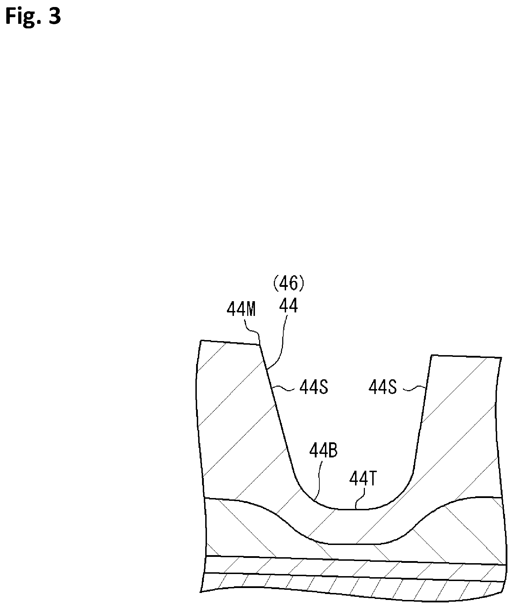

FIG. 3 shows a cross-section of the circumferential groove 44. The circumferential groove 44 has a pair of wall surfaces 44S including a groove opening 44M, and a bottom surface 44B including a groove bottom 44T.

In the present invention, a circumferential groove that has a wide groove width and whose pair of wall surfaces do not come into contact with each other even when the tread comes into contact with a road surface and becomes deformed, is referred to as circumferential main groove. A circumferential groove that has a narrow groove width and whose pair of wall surfaces can come into contact with each other when the tread comes into contact with a road surface and becomes deformed, is referred to as circumferential narrow groove.

All the circumferential grooves 44 provided on the tread 4 have a wide groove width. Even when the tread 4 comes into contact with a road surface and becomes deformed, the pair of wall surfaces 44S of each circumferential groove 44 do not come into contact with each other. All the circumferential grooves 44 provided on the tread 4 are circumferential main grooves 46.

From the viewpoint that the tire 2 can exhibit good wet performance, the groove depth of each circumferential main groove 46 is preferably 8 mm or more and 21 mm or less, and more preferably 13 mm or more and 18 mm or less. The groove width of each circumferential main groove 46 is preferably 4.0% or more and 10% or less of the width TW of the tread 4.

In the present invention, in the case where the tread has a plurality of circumferential grooves aligned in the axial direction, among these circumferential grooves, the two circumferential grooves located on the outermost sides in the axial direction are shoulder circumferential grooves. The circumferential groove located on the equator plane is a center circumferential groove. In the case where no circumferential groove is provided on the equator plane, among circumferential grooves located in a zone between the equator plane and each end of the tread surface, a circumferential groove closest to the equator plane is a center circumferential groove. In the case where a circumferential groove is located between the center circumferential groove and the shoulder circumferential groove, the circumferential groove located between the center circumferential groove and the shoulder circumferential groove is a middle circumferential groove.

The tread 4 of the tire 2 has three circumferential grooves 44. Among the three circumferential grooves 44, the circumferential grooves 44 located on the outermost sides in the axial direction are shoulder circumferential grooves 48. The circumferential groove 44 located on the equator plane EL is a center circumferential groove 50. The tread 4 has the center circumferential groove 50 and a pair of the shoulder circumferential grooves 48.

As described above, the tread 4 includes at least three circumferential grooves 44. The at least three circumferential grooves 44 demarcate at least four land portions 52 in the tread 4. The at least four land portions 52 are aligned in the axial direction.

In the present invention, among at least four land portions formed in the tread, the two land portions located on the outermost sides in the axial direction are shoulder land portions. A plurality of land portions located between the two shoulder land portions are main land portions. The at least four land portions include the two shoulder land portions and the plurality of main land portions located between the two shoulder land portions.

Among the plurality of main land portions, if any main land portion is located on the equator plane, this main land portion is a crown land portion. In the case where there is no main land portion on the equator plane, among main land portions located between the equator plane and each shoulder land portion, the main land portion closest to the equator plane is a crown land portion. In the case where the tread has three or more main land portions, the main land portions located adjacent to the crown land portion are middle land portions.

The tread 4 of the tire 2 includes four land portions 52. Among the four land portions 52, the two land portions 52 located on the outermost sides in the axial direction are shoulder land portions 54. Each shoulder land portion 54 includes the end TE of the tread surface 22. The two land portions 52 located between the two shoulder land portions 54 are main land portions 56. In the case of the tire 2, each of the two main land portions 56 is a main land portion closest to the equator plane EL and thus is also referred to as crown land portion 58.

The above-described conducting portion 36 is provided in one of the two main land portions 56 provided in the tread 4. In the tire 2, at least one main land portion 56 among the plurality of main land portions 56 includes the conducting portion 36.

As described above, the two main land portions 56 of the tire 2 are the crown land portion 58. The conducting portion 36 is provided in the crown land portion 58. The conducting portion 36 is provided in one of the two crown land portions 58.

The reinforcement layer 14 of the tire 2 includes a belt 60. The belt 60 includes a plurality of belt plies 64 aligned in the radial direction. Specifically, the belt 60 of the tire 2 includes three belt plies 64. The belt 60 may be composed of four or more belt plies 64. From the viewpoint of reducing rolling resistance, it is preferable that the belt 60 is composed of three or fewer belt plies 64.

The three belt plies 64 are, from the radially inner side, a first belt ply 64A, a second belt ply 64B, and a third belt ply 64C.

The first belt ply 64A is the belt ply 64 located on the innermost side in the radial direction. The third belt ply 64C is a belt ply 64 located on the outermost side in the radial direction.

In FIG. 1, a length indicated by a double-headed arrow W1 is the width in the axial direction of the first belt ply 64A. A length indicated by a double-headed arrow W2 is the width in the axial direction of the second belt ply 64B. A length indicated by a double-headed arrow W3 is the width in the axial direction of the third belt ply 64C. The width in the axial direction of each belt ply 64 is represented as the distance in the axial direction from one end to another end of the belt ply 64.

In the tire 2, the first belt ply 64A has a widest width W1 in the axial direction. The width W1 in the axial direction of the first belt ply 64A is the width in the axial direction of the belt 60, and an end 64Ae of the first belt ply 64A is an end 60e of the belt 60. The third belt ply 64C has a narrowest width W3 in the axial direction. The width W2 in the axial direction of the second belt ply 64B is narrower than the width W1 in the axial direction of the first belt ply 64A and wider than the width W3 in the axial direction of the third belt ply 64C. An end 64Be of the second belt ply 64B is located axially inward of the end 64Ae of the first belt ply 64A and is located axially outward of an end 64Ce of the third belt ply 64C.

As shown in FIG. 2, the end 64Be of the second belt ply 64B is located axially outward of the shoulder circumferential groove 48, and the end 64Ce of the third belt ply 64C is located axially inward of the shoulder circumferential groove 48. The end 64Ce of the third belt ply 64C may be located axially outward of the shoulder circumferential groove 48.

From the viewpoint of ensuring the stiffness of the tread portion T, the ratio (W1/TW) of the width W1 in the axial direction of the first belt ply 64A to the width TW of the tread 4 is preferably 0.85 or more and 0.95 or less. The ratio (W2/TW) of the width W2 in the axial direction of the second belt ply 64B to the width TW of the tread 4 is preferably 0.80 or more and 0.90 or less. The width W3 in the axial direction of the third belt ply 64C is set as appropriate according to the specifications of the tire 2.

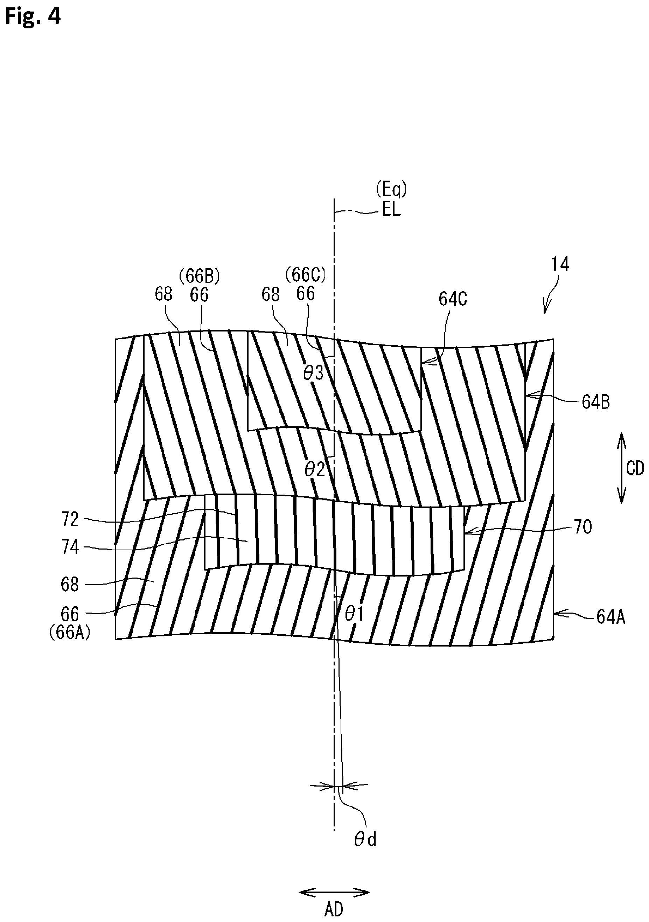

As shown in FIG. 4, each belt ply 64 included in the belt 60 includes a large number of belt cords 66 aligned with each other. The cord ends of each belt ply 64 are 15 ends/50 mm or more and 30 ends/50 mm or less. The material of each belt cord 66 is steel. In FIG. 4, for convenience of description, the belt cords 66 are represented by solid lines, but the belt cords 66 are covered with a belt topping rubber 68. The belt topping rubber 68 is composed of an electrically conductive crosslinked rubber. The belt ply 64 is electrically conductive.

The belt cords 66 of each belt ply 64 are inclined with respect to the circumferential direction. The direction of inclination of the belt cords 66 included in the second belt ply 64B (hereinafter referred to as second belt cords 66B) is opposite to the direction of inclination of the belt cords 66 included in the first belt ply 64A (hereinafter referred to as first belt cords 66A). The direction of inclination of the belt cords 66 included in the third belt ply 64C (hereinafter referred to as third belt cords 66C) is the same as the direction of inclination of the second belt cords 66B. The direction of inclination of the third belt cords 66C may be opposite to the direction of inclination of the second belt cords 66B.

In FIG. 4, an angle θ1 is the angle of the first belt cords 66A with respect to the circumferential direction (hereinafter referred to as inclination angle θ1). An angle θ2 is the angle of the second belt cords 66B with respect to the circumferential direction (hereinafter referred to as inclination angle θ2). An angle θ3 is the angle of the third belt cords 66C with respect to the circumferential direction (hereinafter referred to as inclination angle θ3).

In the present invention, unless otherwise specified, the inclination angle of each belt cord 66 is represented as the angle of the belt cord 66 with respect to the equator plane EL.

The inclination angle θ1 of the first belt cords 66A, the inclination angle θ2 of the second belt cords 66B, and the inclination angle θ3 of the third belt cords 66C are preferably 10 degrees or more and 60 degrees or less. From the viewpoint of effectively constraining the tread portion T and obtaining a ground-contact surface having a small shape change and having a stable shape, the inclination angle θ1 of the first belt cords 66A is more preferably 15 degrees or more and 30 degrees or less, and further preferably 15 degrees or more and 20 degrees or less. The inclination angle θ2 of the second belt cords 66B is more preferably 15 degrees or more and 30 degrees or less, and further preferably 15 degrees or more and 20 degrees or less. The inclination angle θ3 of the third belt cords 66C is more preferably 15 degrees or more and 50 degrees or less.

In the present invention, among the plurality of belt plies included in the belt, the belt ply having a widest width in the axial direction is referred to as reference belt ply, and the belt ply having the next widest width in the axial direction after the reference belt ply is referred to as sub-reference belt ply.

In the tire 2, among the plurality of belt plies 64 included in the belt 60, the first belt ply 64A has the widest width W1 in the axial direction, and the second belt ply 64B has the next widest width W2 in the axial direction after the first belt ply 64A. The first belt ply 64A is a reference belt ply BP, and the second belt ply 64B is a sub-reference belt ply BPS. If the belt ply 64 having the widest width in the axial direction among the plurality of belt plies 64 is the second belt ply 64B and the belt ply 64 having the next widest width in the axial direction after the second belt ply 64B is the first belt ply 64A, the second belt ply 64B is the reference belt ply BP, and the first belt ply 64A is the sub-reference belt ply BPS.

The reinforcement layer 14 of the tire 2 includes the belt 60 including the plurality of belt plies 64, and the plurality of belt plies 64 include the reference belt ply BP having the widest width in the axial direction among the plurality of belt plies 64 and the sub-reference belt ply BPS having the next widest width in the axial direction after the reference belt ply BP among the plurality of belt plies 64. As described above, the direction of inclination of the second belt cords 66B is opposite to the direction of inclination of the first belt cords 66A. Therefore, the direction of inclination of the belt cords 66 included in the sub-reference belt ply BPS is opposite to the direction of inclination of the belt cords 66 included in the reference belt ply BP.

The reinforcement layer 14 of the tire 2 further includes a band 62. The reinforcement layer 14 includes the belt 60 and the band 62.

The band 62 includes a full band 70. Specifically, the band 62 is composed of one full band 70. The band 62 may be composed of two or more full bands 70. The band 62 may further include a pair of edge bands that are placed so as to be spaced apart from each other in the axial direction with the equator plane EL located therebetween. From the viewpoint of reducing rolling resistance, it is preferable that the band 62 is composed of one full band 70.

In FIG. 1, a length indicated by a double-headed arrow WF is the width in the axial direction of the full band 70. The width WF in the axial direction of the full band 70 is represented as the distance in the axial direction from one end 70e to another end 70e of the full band 70. As described above, the band 62 of the tire 2 is composed of the one full band 70. Each end 70e of the full band 70 is an end 62e of the band 62, and the width WF in the axial direction of the full band 70 is also the width in the axial direction of the band 62.

The end 70e of the full band 70 as the end 62e of the band 62 is located axially inward of the end 64Ae of the first belt ply 64A as the end 60e of the belt 60. The band 62 of the tire 2 is narrower than the belt 60. Therefore, each end 60e of the belt 60 is an end 14e of the reinforcement layer 14.

The end 70e of the full band 70 is located axially inward of the end 64Be of the second belt ply 64B. The full band 70 is narrower than the first belt ply 64A and the second belt ply 64B. The end 70e of the full band 70 is located axially outward of the end 64Ce of the third belt ply 64C. The full band 70 is wider than the third belt ply 64C.

As shown in FIG. 4, the full band 70 includes a band cord 72. In FIG. 4, for convenience of description, the band cord 72 is represented by solid lines, but the band cord 72 is covered with a band topping rubber 74. The material of the band cord 72 is steel. The band topping rubber 74 is composed of an electrically conductive crosslinked rubber. The full band 70 is electrically conductive.

Although not described in detail, the full band 70 is formed by helically winding a band strip (not shown) including the band cord 72. The full band 70 constituting the band 62 includes the helically wound band cord 72. The full band 70 has a jointless structure.

Since the full band 70 is formed by helically winding the band strip, the band cord 72 is slightly inclined with respect to the circumferential direction. In FIG. 4, an angle θd is the angle of the band cord 72 with respect to the circumferential direction (hereinafter referred to as inclination angle θd). In the present invention, unless otherwise specified, the inclination angle θd of the band cord 72 is represented as the angle of the band cord 72 with respect to the equator plane EL.

The inclination angle θd of the band cord 72 of the tire 2 is 5 degrees or less and preferably 2 degrees or less. The band cord 72 extends substantially in the circumferential direction.

For example, as shown in FIG. 2, the full band 70 is located between the first belt ply 64A and the second belt ply 64B in the radial direction. The full band 70 may be located radially outward of the third belt ply 64C. The full band 70 may be located between the second belt ply 64B and the third belt ply 64C in the radial direction. The full band 70 may be located radially inward of the first belt ply 64A. In the reinforcement layer 14 of the tire 2, the plurality of belt plies 64 of the belt 60 and the full band 70 of the band 62 are aligned in the radial direction.

As described above, the belt plies 64 and the full band 70 are electrically conductive. The reinforcement layer 14, which is composed of the plurality of belt plies 64 and the full band 70 aligned in the radial direction, is also electrically conductive.

As shown in FIG. 1, the rim R comes into contact with the chafer 8. The chafer 8 is in contact with the carcass 12. The carcass 12 is in contact with the reinforcement layer 14. As described above, the conducting portion 36 connects a road surface and the reinforcement layer 14. The chafer 8, the carcass 12, the reinforcement layer 14, and the conducting portion 36 are electrically conductive. The chafer 8, the carcass 12, the reinforcement layer 14, and the conducting portion 36 form a conductive path connecting the rim R and a road surface. Static electricity generated in the vehicle and the tire 2 flows from the rim R to the road surface through the conductive path.

The conductive path for which the present invention is applicable is not limited to the conductive path shown in FIG. 1 as long as the conductive path is a conductive path passing through the conducting portion 36 formed in the tread 4. The conductive path shown in FIG. 1 is an example of the conductive path for which the present invention is applicable.

The conducting portion 36 can contribute to discharging static electricity generated in the vehicle, to a road surface. In the tire 2, static electricity that is accumulated in a tire in which no conducting portion 36 is provided is effectively discharged to a road surface. The tire 2 has good electrical conduction performance. The tire 2 can suppress accumulation of static electricity.

The conducting portion 36 is not provided in the two shoulder land portions 54 located on the outermost sides in the axial direction but is provided in the main land portion 56 located between the two shoulder land portions 54. Accordingly, an increase in the risk of occurrence of uneven wear is prevented.

The reinforcement layer 14 is located between the tread 4 and the carcass 12, and the reinforcement layer 14 includes the full band 70. As described above, the full band 70 includes the helically wound band cord 72. The full band 70 restricts the tire 2 from moving so as to expand outward. Since the band cord 72 is a steel cord, this movement is effectively suppressed. The ground-contact shape of the tire 2 when the tire 2 is new is configured as a rectangular shape rather than a round shape. Since a shape change of the tire 2 due to running is suppressed, the rectangular ground-contact shape is maintained. In the tire 2, the ground-contact pressure at the crown portion is less likely to increase, and a state where the ground-contact pressure at the crown portion is less likely to increase can be maintained. The conducting portion 36 provided in the main land portion 56 located between the two shoulder land portions 54, in other words, the conducting portion 36 provided in the crown portion, is less likely to become a starting point for uneven wear.

The uneven wear resistance of the tire 2 is improved compared to a conventional tire in which a conducting portion is provided in a crown portion. The tire 2 can maintain good uneven wear resistance. The tire 2 can suppress accumulation of static electricity while maintaining uneven wear resistance. Even though the cap layer 30 of the tread 4 is formed from a crosslinked rubber that has low heat generation properties, the conducting portion 36 can stably exhibit its function. The tire 2 can achieve reduction of rolling resistance.

The ratio (WF/TW) of the width WF in the axial direction of the full band 70 to the width TW of the tread 4 is preferably 0.60 or more. Accordingly, the full band 70 can effectively contribute to suppressing an increase in the ground-contact pressure at the crown portion. The tire 2 can suppress accumulation of static electricity while maintaining uneven wear resistance. From this viewpoint, the ratio (WF/TW) is more preferably 0.65 or more and further preferably 0.70 or more. From the viewpoint that the full band 70 can contribute to reducing rolling resistance, the ratio (WF/TW) is preferably 0.90 or less, more preferably 0.85 or less, and further preferably 0.80 or less.

For example, as shown in FIG. 2, the end 70e of the full band 70 is located axially outward of the shoulder circumferential groove 48. Accordingly, the full band 70 can effectively contribute to suppressing an increase in the ground-contact pressure at the crown portion. The tire 2 can suppress accumulation of static electricity while maintaining uneven wear resistance. From this viewpoint, it is preferable that the end 70e of the full band 70 is located axially outward of the shoulder circumferential groove 48.

The cord ends of the full band 70 are preferably 20 ends/50 mm or more. Accordingly, the full band 70 can effectively contribute to suppressing a shape change of the tire 2 due to running. An increase in the ground-contact pressure at the crown portion is suppressed. Occurrence of uneven wear starting from the conducting portion 36 is suppressed, and thus the conducting portion 36 can stably exhibit its function. The tire 2 can suppress accumulation of static electricity while maintaining uneven wear resistance. From this viewpoint, the cord ends of the full band 70 are preferably 22 ends/50 mm or more. From the viewpoint that the full band 70 can contribute to reducing rolling resistance, the cord ends of the full band 70 are preferably 30 ends/50 mm or less and more preferably 28 ends/50 mm or less.

In FIG. 2, a length indicated by a double-headed arrow CW is the width of the conducting portion 36. In the tire 2, the width CW of the conducting portion 36 is preferably 8.0 mm or less. Accordingly, occurrence of wear at the conducting portion 36 is suppressed. The tire 2 can suppress accumulation of static electricity while maintaining uneven wear resistance. From this viewpoint, the width CW of the conducting portion 36 is more preferably 6.0 mm or less and further preferably 4.0 mm or less. From the viewpoint that the conducting portion 36 can exhibit its function, the width CW of the conducting portion 36 is preferably 1.0 mm or more.

As described above, in the reinforcement layer 14 of the tire 2, the first belt ply 64A is the reference belt ply BP, and the second belt ply 64B is the sub-reference belt ply BPS. The full band 70 of the reinforcement layer 14 is located between the first belt ply 64A and the second belt ply 64B in the radial direction. The direction of inclination of the second belt cords 66B is opposite to the direction of inclination of the first belt cords 66A. That is, the full band 70 of the tire 2 is located between the reference belt ply BP and the sub-reference belt ply BPS in which the directions of inclination of the belt cords 66 are opposite to each other. The reinforcement layer 14, which includes the reference belt ply BP, the sub-reference belt ply BPS, and the full band 70, can effectively contribute to suppressing radially outward growth due to running.

Since the band cord 72 included in the full band 70 extends substantially in the circumferential direction and the belt cords 66 included in the sub-reference belt ply BPS are arranged so as to intersect the belt cords 66 included in the reference belt ply BP, shear strain generated in the rubber located between the band cord 72 and the belt cord 66 is reduced. The full band 70 can stably continue to exhibit the function of suppressing radially outward growth. In the tire 2, the ground-contact pressure at the crown portion is less likely to increase, and a state where the ground-contact pressure at the crown portion is less likely to increase can be maintained. The conducting portion 36 of the tire 2 is provided in the crown portion, but the conducting portion 36 is less likely to become a starting point for uneven wear. The uneven wear resistance of the tire 2 is improved, and the tire 2 can maintain good uneven wear resistance. From this viewpoint, it is preferable that the plurality of belt plies 64 include the reference belt ply BP and the sub-reference belt ply BPS in which the directions of inclination of the belt cords 66 are opposite to each other, and the full band 70 is located between the reference belt ply BP and the sub-reference belt ply BPS in the radial direction. In this case, it is more preferable that the reference belt ply BP is located radially inward of the full band 70 and the sub-reference belt ply BPS is located radially outward of the full band 70.

As described above, in the tire 2, at least one main land portion 56 among the plurality of main land portions 56 includes the conducting portion 36. The preferred position of the conducting portion 36 provided in the main land portion 56 will be described with reference to FIG. 2.

In FIG. 2, a length indicated by a double-headed arrow WM is the width in the axial direction of the crown land portion 58. As described above, the crown land portion 58 of the tire 2 is the main land portion 56. The width WM in the axial direction of the crown land portion 58 is the width in the axial direction of the main land portion 56. The width WM in the axial direction of the main land portion 56 is represented as the distance in the axial direction from one edge 56e to another edge 56e of the main land portion 56. An alternate long and short dash line CL is a width center line of the conducting portion 36. A length indicated by a double-headed arrow WC is the distance in the axial direction from the edge 56e on the end TE side of the tread surface 22 out of the two edges 56e of the main land portion 56 to the width center line CL of the conducting portion 36.

The ratio (WC/WM) of the distance WC in the axial direction from the edge 56e on the end TE side of the tread surface 22 out of the two edges 56e of the main land portion 56 to the width center line CL of the conducting portion 36, to the width WM in the axial direction of the main land portion 56, is preferably 0.30 or more and 0.70 or less. Accordingly, the conducting portion 36 is placed at an appropriate distance from the edge 56e of the main land portion 56. Generation of specific strain in the conducting portion 36 is suppressed. Accordingly, occurrence of wear starting from the conducting portion 36 is suppressed. The tire 2 can suppress accumulation of static electricity while maintaining uneven wear resistance. From this viewpoint, the ratio (WC/WM) is more preferably 0.40 or more and 0.60 or less, and further preferably 0.45 or more and 0.55 or less.

In FIG. 2, a length indicated by a double-headed arrow WS is the width in the axial direction of the shoulder land portion 54. The width WS in the axial direction is represented as the distance in the axial direction from one edge 54e to another edge of the shoulder land portion 54, that is, the end TE of the tread surface 22. A length indicated by a double-headed arrow WB is the distance in the axial direction from the edge 54e on the equator plane side of the shoulder land portion 54 to the end 70e of the full band 70.

As described above, the end 70e of the full band 70 is located axially outward of the shoulder circumferential groove 48. Therefore, the end 70e of the full band 70 is located within the shoulder land portion 54. In the tire 2 shown in FIG. 1, the end 70e of the full band 70 is located axially inward of the position at which the width WS in the axial direction of the shoulder land portion 54 is halved. The full band 70 restricts the movement of the shoulder land portion 54. The full band 70 effectively suppresses a shape change of the entire tread portion T. The tire 2 can maintain good uneven wear resistance. From this viewpoint, the ratio (WB/WS) of the distance WB in the axial direction from the edge 54e on the equator plane side of the shoulder land portion 54 to the end 70e of the full band 70, to the width WS in the axial direction of the shoulder land portion 54, is preferably 0.10 or more, more preferably 0.20 or more, and further preferably 0.25 or more. From the viewpoint that the full band 70 can contribute to reducing rolling resistance, the ratio (WB/WS) is preferably 0.70 or less, more preferably 0.60 or less, and further preferably 0.50 or less.

In FIG. 2, a length indicated by a double-headed arrow WP is the width in the axial direction of the strip layer 18. The width WP in the axial direction is represented as the distance in the axial direction from one end 18e to another end 18e of the strip layer 18.

The reinforcement layer 14 of the tire 2 includes the full band 70 in addition to the plurality of belt plies 64. The full band 70 inhibits the tire 2 from moving so as to expand outward. Strain is likely to be generated between the carcass 12 and the reinforcement layer 14. However, the strip layer 18 which is softer than the carcass 12 and the reinforcement layer 14 is located between the carcass 12 and the reinforcement layer 14 of the tire 2. Furthermore, the strip layer 18 has the width WP in the axial direction that is substantially the same as the width WF in the axial direction of the full band 70. The strip layer 18 can contribute to alleviating strain generated between the reinforcement layer 14 and the carcass 12. Occurrence of damage between the carcass 12 and the reinforcement layer 14 is suppressed, and thus the full band 70 can stably exhibit its function. The tire 2 can maintain good uneven wear resistance. Occurrence of uneven wear starting from the conducting portion 36 is suppressed, and thus the conducting portion 36 can stably exhibit its function. The tire 2 can suppress accumulation of static electricity while maintaining uneven wear resistance. From this viewpoint, it is preferable that the tire 2 includes the strip layer 18 formed from a crosslinked rubber, between the carcass 12 and the reinforcement layer 14, and the strip layer 18 has the width WP in the axial direction that is substantially the same as the width WF in the axial direction of the full band 70. From the same viewpoint, specifically, the ratio (WP/WF) of the width WP in the axial direction of the strip layer 18 to the width WF in the axial direction of the full band 70 is preferably 0.80 or more and 1.2 or less, and more preferably 0.90 or more and 1.1 or less.

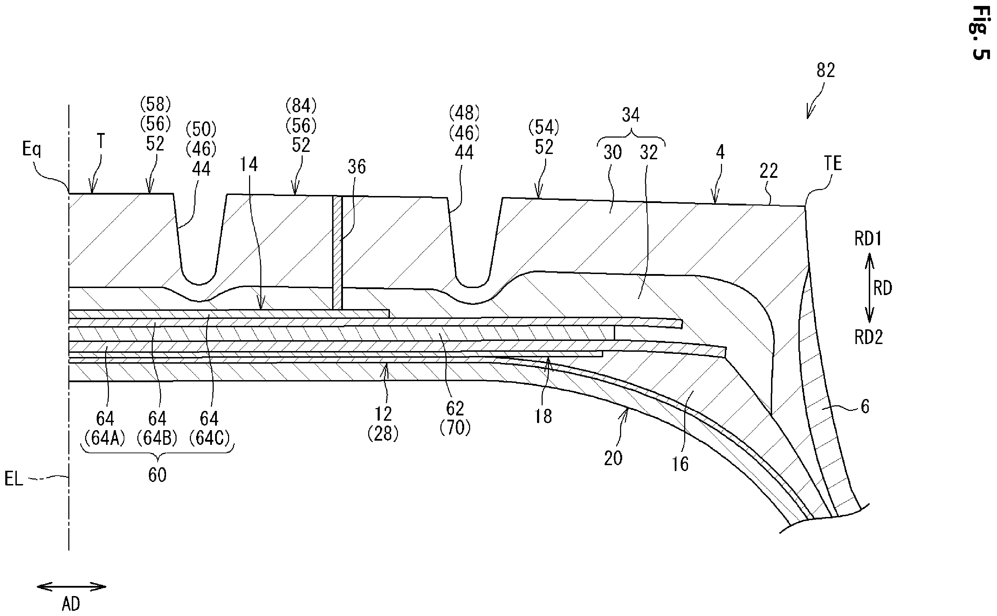

FIG. 5 is an enlarged cross-sectional view showing a modification of the tread portion T. FIG. 5 shows a part of a meridian cross-section of a tire 82 according to another embodiment of the present invention. The same components as those of the tire 2 shown in FIG. 1 are denoted by the same reference characters, and the description thereof is omitted.

The tread 4 of the tire 82 also has a plurality of circumferential grooves 44. On the tread 4 of the tire 82, four circumferential grooves 44 are formed. The four circumferential grooves 44 are also the above-described circumferential main grooves 46. Among the four circumferential grooves 44, the circumferential grooves 44 located on the outermost sides in the axial direction are shoulder circumferential grooves 48. Among the circumferential grooves 44 located in a zone between the equator plane EL and each end TE of the tread surface 22, the circumferential groove 44 closest to the equator plane EL is a center circumferential groove 50. The tread 4 has a pair of the center circumferential grooves 50 and a pair of the shoulder circumferential grooves 48.

In the tread 4, five land portions 52 are formed. Among the five land portions 52, the two land portions 52 located on the outermost sides in the axial direction are shoulder land portions 54. The three land portions 52 located between the two shoulder land portions 54 are main land portions 56. Among the three main land portions 56, the main land portion 56 located on the equator plane EL is a crown land portion 58. The main land portions 56 located adjacent to the crown land portion 58 are middle land portions 84. The tread 4 has the crown land portion 58, a pair of the middle land portions 84, and a pair of the shoulder land portions 54.

In the tire 82 as well, the conducting portion 36 is provided in the main land portion 56. Specifically, the conducting portion 36 is provided in the middle land portion 84 as the main land portion 56. The conducting portion 36 may be provided in the crown land portion 58 located on the equator plane EL as the main land portion 56.

As described above, the conducting portion 36 may become a starting point for uneven wear. From the viewpoint of reducing the risk of occurrence of uneven wear, it is preferable that only one of the plurality of main land portions 56 provided in the tread 4 includes the conducting portion 36. In this case, if the tread 4 has three or more main land portions 56, it is more preferable that the main land portion 56 in which the conducting portion 36 is provided is the crown land portion 58 or any one of the middle land portions 84 located adjacent to the crown land portion 58. In the case where two main land portions 56 are provided in a tread 4 as in the tread 4 shown in FIG. 2 or in the case where one main land portion 56 is provided in a tread 4 (not shown), each main land portion 56 provided in the tread 4 is a crown land portion 58. In the case where a tread 4 has two or fewer main land portions 56, the main land portion 56 in which the conducting portion 36 is provided is necessarily a crown land portion 58. That is, in the case where only one of the plurality of main land portions 56 provided in the tread 4 includes the conducting portion 36, the main land portion 56 in which the conducting portion 36 is provided is preferably either the crown land portion 58 or any one of the middle land portions 84.

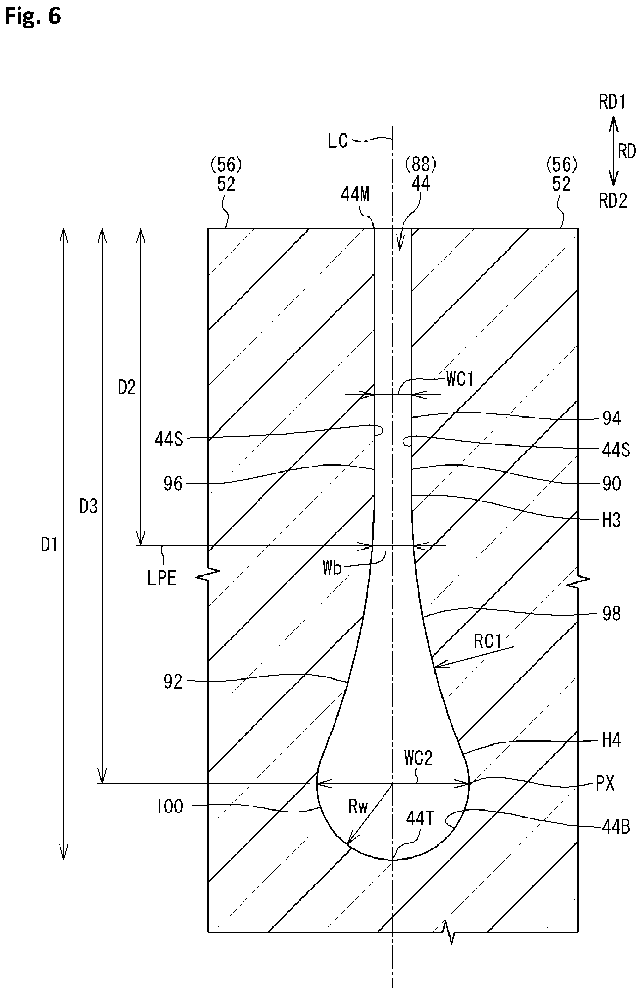

In the tread portion T shown in FIG. 5, the center circumferential groove 50 is located between the crown land portion 58 and the middle land portion 84. In the tread portion T shown in FIG. 2, the center circumferential groove 50 is located between the two crown land portions 58. The center circumferential groove 50 shown in FIG. 5 and the center circumferential groove 50 shown in FIG. 2 are both located between the two main land portions 56 adjacent to each other in the axial direction. The center circumferential groove 50 in FIG. 5 and the center circumferential groove 50 in FIG. 2 are the circumferential main grooves 46, but the circumferential groove 44 located between the two main land portions 56 adjacent to each other in the axial direction may be configured as a circumferential groove 44 in FIG. 6.

FIG. 6 shows a modification of the circumferential groove 44. A cross-section of the circumferential groove 44 shown in FIG. 6 is a cross-section of the circumferential groove 44 along a plane perpendicular to the length direction of the circumferential groove 44.

As described above, the circumferential groove 44 has the pair of wall surfaces 44S including the groove opening 44M, and the bottom surface 44B including the groove bottom 44T. An alternate long and short dash line LC is a center line of the circumferential groove 44. The circumferential groove 44 has a cross-sectional shape that is symmetrical with respect to the center line LC. The center line LC extends in the depth direction of the circumferential groove 44 and passes through the groove bottom 44T.

The circumferential groove 44 in FIG. 6 is a groove that has a narrow groove width and whose pair of wall surfaces 44S can come into contact with each other when the tread 4 comes into contact with a road surface and becomes deformed (hereinafter referred to as circumferential narrow groove 88).

The circumferential narrow groove 88 includes a body portion 90 and a wide portion 92. The body portion 90 includes the groove opening 44M of the circumferential narrow groove 88. The wide portion 92 includes the groove bottom 44T of the circumferential narrow groove 88. When the tread 4 becomes worn and a narrow groove portion 94 disappears, the wide portion 92 is exposed. In FIG. 6, a length indicated by a double-headed arrow WC1 is the minimum groove width of the circumferential narrow groove 88, and a length indicated by a double-headed arrow WC2 is the maximum groove width of the circumferential narrow groove 88. The circumferential narrow groove 88 has the minimum groove width WC1 at the body portion 90 and has the maximum groove width WC2 at the wide portion 92.

The body portion 90 includes the narrow groove portion 94. The narrow groove portion 94 of the tire 2 extends in the depth direction of the circumferential narrow groove 88 from the groove opening 44M of the circumferential narrow groove 88. The narrow groove portion 94 includes the groove opening 44M of the circumferential narrow groove 88. The body portion 90 has the minimum groove width WC1 at the narrow groove portion 94. The minimum groove width WC1 is set such that when the tread 4 comes into contact with a road surface and becomes deformed, the pair of wall surfaces 44S of the circumferential narrow groove 88 come into contact with each other at the narrow groove portion 94.

The narrow groove portion 94 has a portion extending straight in the depth direction (hereinafter also referred to as straight portion 96). The straight portion 96 is a portion, of the narrow groove portion 94, having a groove width WC1 that is uniform in the depth direction. The narrow groove portion 94 includes the straight portion 96 having the groove width WC1 that is uniform in the depth direction. Although not shown, the narrow groove portion 94 may be configured, for example, such that the groove width gradually increases from the position where the narrow groove portion 94 has the minimum groove width WC1, toward each of the groove opening 44M and the wide portion 92.

The wide portion 92 is located radially inward of the body portion 90. The groove width of the wide portion 92 is wider than the groove width of the body portion 90. A position indicated by reference character PX is the position at which the wide portion 92 has the maximum groove width WC2 (hereinafter referred to as maximum groove width position). The wide portion 92 is tapered outward from the maximum groove width position PX and is tapered inward from the maximum groove width position PX.

In FIG. 6, a position indicated by a solid line LPE is the boundary between the body portion 90 (specifically, the narrow groove portion 94) and the wide portion 92. The boundary LPE is represented as the position at which the circumferential narrow groove 88 has a width Wb that is 1.1 times the minimum groove width WC1 of the narrow groove portion 94. If a portion having the width Wb that is 1.1 times the minimum groove width WC1 has a certain length, the radially outer end of this portion is the boundary LPE.

The wide portion 92 of the circumferential narrow groove 88 includes an inflection portion 98 and a bottom portion 100. The wide portion 92 has the maximum groove width WC2 at the bottom portion 100. In FIG. 6, a position indicated by reference character H4 is the boundary between the inflection portion 98 and the bottom portion 100.

The inflection portion 98 connects the narrow groove portion 94 and the bottom portion 100. The groove width of the inflection portion 98 gradually increases from the boundary LPE with the narrow groove portion 94 toward the boundary H4 with the bottom portion 100. The inflection portion 98 is curved so as to be recessed inward from the outer side thereof. Specifically, in a cross-section of the circumferential narrow groove 88, the contour of the inflection portion 98 is represented by an arc. In FIG. 6, an arrow RC1 indicates the radius of the arc representing the contour of the inflection portion 98. The arc representing the contour of the inflection portion 98 is tangent to a straight line representing the contour of the straight portion 96, at a boundary H3 between the inflection portion 98 and the straight portion 96.

The bottom portion 100 is located radially inward of the inflection portion 98. The bottom portion 100 includes the groove bottom 44T of the circumferential narrow groove 88. In the cross-section of the circumferential narrow groove 88 shown in FIG. 6, the contour of the bottom portion 100 of the circumferential narrow groove 88 is represented by a single arc having a radius Rw. The center of the arc representing the contour of the bottom portion 100 is located on the center line LC of the circumferential narrow groove 88. The radius Rw of the arc representing the contour of the bottom portion 100 is equal to half the maximum groove width WC2 of the wide portion 92. The arc representing the contour of the bottom portion 100 is tangent to the arc representing the contour of the inflection portion 98, at the boundary H4. The radius Rw of this arc is, for example, 1.5 mm or more and 3.5 mm or less.

In FIG. 6, a length indicated by a double-headed arrow D1 is the groove depth of the circumferential narrow groove 88. A length indicated by a double-headed arrow D2 is the groove depth of the body portion 90 of the circumferential narrow groove 88. The groove depth D2 is represented as the distance in the depth direction from the groove opening 44M of the circumferential narrow groove 88 to the boundary LPE. A length indicated by a double-headed arrow D3 is the groove depth from the groove opening 44M of the circumferential narrow groove 88 to the position PX at which the wide portion 92 has the maximum groove width WC2.

For example, when the center circumferential groove 50 in FIG. 5 is configured as the circumferential narrow groove 88, if the tread 4 comes into contact with a road surface and becomes deformed, the pair of wall surfaces 44S of the circumferential narrow groove 88 come into contact with each other at the narrow groove portion 94. The land portions 52 located on both sides of the circumferential narrow groove 88 support each other, so that deformation of the tread 4 is suppressed. Since a shape change of the tire 2 due to running is suppressed, the rectangular ground-contact shape of the tire 2 is maintained. In the tire 2, the ground-contact pressure at the crown portion is less likely to increase, and a state where the ground-contact pressure at the crown portion is less likely to increase can be maintained. The conducting portion 36 provided in the main land portion 56 located between the two shoulder land portions 54 is less likely to become a starting point for uneven wear. The tire 2 can maintain good uneven wear resistance. The tire 2 can suppress accumulation of static electricity while maintaining uneven wear resistance. From this viewpoint, the circumferential groove 44 located between the two adjacent main land portions 56 is preferably the circumferential narrow groove 88. In this case, from the viewpoint of suppressing a decrease in running performance on a wet road surface (hereinafter referred to as wet performance), the circumferential groove 44 located between the shoulder land portion 54 and the main land portion 56 located adjacent to the shoulder land portion 54 is preferably the circumferential main groove 46.

In the case where the circumferential groove 44 located between the two adjacent main land portions 56 is configured as the circumferential narrow groove 88 and the circumferential groove 44 located between the shoulder land portion 54 and the main land portion 56 located adjacent to the shoulder land portion 54 is configured as the circumferential main groove 46, from the viewpoint that the circumferential narrow groove 88 can sufficiently exhibit its function, it is preferable that the groove depth D1 of the circumferential narrow groove 88 is the same as the groove depth of the circumferential main groove 46, or the circumferential narrow groove 88 is shallower than the circumferential main groove 46. Specifically, the groove depth D1 of the circumferential narrow groove 88 is preferably 0.75 times or more the groove depth of the circumferential main groove 46 and is preferably 100 times or less the groove depth of the circumferential main groove 46.

As described above, the conducting portion 36 is formed from an electrically conductive crosslinked rubber. As the tire 2 runs, the conducting portion 36 is considered to generate heat. The tire 2 is a heavy duty tire, and the tread 4 is thicker than that of a tire for a passenger car. When the conducting portion 36 generates heat, the temperature around the conducting portion 36 rises, and there is a concern that uneven wear resistance may decrease depending on the degree of the rise.

However, as described above, the circumferential narrow groove 88 includes the wide portion 92 on the radially inner side of the narrow groove portion 94, and the maximum groove width WC2 of the wide portion 92 is wider than the minimum groove width WC1 of the narrow groove portion 94. The wide portion 92 contributes to increasing the surface area of the circumferential narrow groove 88. The surface area of the circumferential narrow groove 88 is larger than that of a circumferential narrow groove composed only of the narrow groove portion 94. The circumferential narrow groove 88 can contribute to dissipation of heat generated in the conducting portion 36. Even when the conducting portion 36 generates heat, a rise in the temperature around the conducting portion 36 is suppressed. The tire 2 can suppress the influence of a rise in the temperature on uneven wear resistance to be smaller.

Furthermore, as the tread 4 wears, the circumferential narrow groove 88 gradually disappears. After the narrow groove portion 94 disappears, the wide portion 92 becomes exposed. In the circumferential narrow groove 88, the maximum groove width WC2 of the wide portion 92 is wider than the minimum groove width WC1 of the narrow groove portion 94. In and after the middle stage of wear in which the narrow groove portion 94 disappears due to wear of the tread 4, the exposed wide portion 92 can contribute to suppressing a decrease in wet performance.

From the viewpoint of uneven wear resistance and suppressing a decrease in wet performance, it is preferable that the circumferential narrow groove 88 includes the narrow groove portion 94 and the wide portion 92, and the wide portion 92 has the maximum groove width WC2 that is wider than the minimum groove width WC1 of the narrow groove portion 94. In this case, the maximum groove width WC2 of the wide portion 92 is preferably 2 times or more and more preferably 3 times or more the minimum groove width WC1 of the narrow groove portion 94. From the viewpoint that the influence on the stiffness of the crown portion of the tread 4 is suppressed and the tire 2 can maintain good uneven wear resistance, the maximum groove width WC2 of the wide portion 92 is preferably 8 times or less and more preferably 7 times or less the minimum groove width WC1 of the narrow groove portion 94.

The minimum groove width WC1 of the narrow groove portion 94 is preferably 2.5 mm or less. Accordingly, when the tread 4 comes into contact with a road surface and becomes deformed, the pair of wall surfaces 44S of the circumferential narrow groove 88 can effectively come into contact with each other at the narrow groove portion 94. Deformation of the tread 4 is suppressed, so that the tire 2 can maintain good wear resistance. From this viewpoint, the minimum groove width WC1 is more preferably 2.0 mm or less. From the viewpoint that water existing between the tread 4 and a wet road surface is effectively drained through the circumferential narrow groove 88, the minimum groove width WC1 is preferably 1.0 mm or more.

In the tire 2, the radius RC1 of the arc representing the contour of the inflection portion 98 is larger than the radius Rw of the arc representing the contour of the bottom portion 100. Accordingly, the circumferential narrow groove 88 can sufficiently exhibit its function. From this viewpoint, the ratio RC1/Rw of the radius RC1 to the radius Rw is preferably 1.5 or more and 20 or less.

When the ratio RC1/Rw is set to 1.5 or more, the tire 2 can suppress occurrence of uneven wear due to a rapid change in stiffness. From this viewpoint, the ratio RC1/Rw is more preferably 2.0 or more.

When the ratio RC1/Rw is set to 20 or less, the tire 2 can suppress a decrease in wet performance. From this viewpoint, the ratio RC1/Rw is more preferably 15 or less.

The ratio D2/D1 of the groove depth D2 of the body portion 90 to the groove depth D1 of the circumferential narrow groove 88 is preferably 0.25 or more and 0.70 or less.

When the ratio D2/D1 is set to 0.25 or more, the groove depth D2 of the body portion 90 is appropriately maintained. When the tread 4 comes into contact with a road surface and becomes deformed, the pair of wall surfaces 44S of the circumferential narrow groove 88 can come into sufficient contact with each other at the narrow groove portion 94. The tire 2 can maintain good uneven wear resistance. From this viewpoint, the ratio D2/D1 is more preferably 0.30 or more.

When the ratio D2/D1 is set to 0.70 or less, the wide portion 92 having the required groove volume can be configured in the tire 2. The exposed wide portion 92 can effectively contribute to suppressing a decrease in wet performance. From this viewpoint, the ratio D2/D1 is more preferably 0.65 or less.

From the viewpoint that the wide portion 92 can effectively contribute to dissipation of heat generated in the conducting portion 36, the ratio D3/D1 of the groove depth D3 from the groove opening 44M of the circumferential narrow groove 88 to the position PX at which the wide portion 92 has the maximum groove width WC2, to the groove depth D1 of the circumferential narrow groove 88, is preferably 0.75 or more and 0.95 or less.

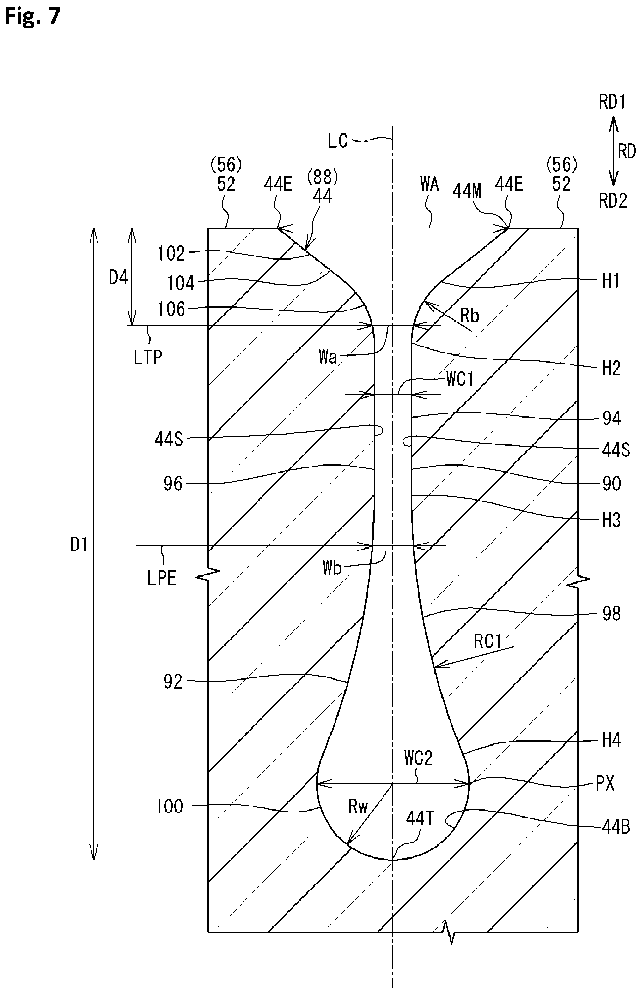

FIG. 7 shows a modification of the circumferential narrow groove 88. In the circumferential narrow groove 88, a portion at the groove opening 44M thereof is processed in a tapered manner. The body portion 90 of the circumferential narrow groove 88 includes a funnel portion 102 on the radially outer side of the narrow groove portion 94.

In FIG. 7, a position indicated by a solid line LTP is the boundary between the funnel portion 102 and the narrow groove portion 94. The boundary LTP is represented as the position at which the circumferential narrow groove 88 has a width Wa that is 1.1 times the minimum groove width WC1 of the narrow groove portion 94 at a boundary portion between the funnel portion 102 and the narrow groove portion 94. If a portion having the width Wa that is 1.1 times the minimum groove width WC1 has a certain length, the radially inner end of this portion is used as the boundary LTP.

The funnel portion 102 is tapered inward from the groove opening 44M. In FIG. 6, a length indicated by a double-headed arrow WA is the groove width of the funnel portion 102 at the groove opening 44M. The groove width WA of the funnel portion 102 is preferably 0.15 times or more and 0.45 times or less the groove width of the circumferential main groove 46.

The funnel portion 102 includes an inclined portion 104 and a connection portion 106. A position indicated by reference character H1 is the boundary between the inclined portion 104 and the connection portion 106. The inclined portion 104 includes the groove opening 44M of the circumferential narrow groove 88. The groove width of the inclined portion 104 gradually decreases from the groove opening 44M toward the connection portion 106. In a cross-section of the circumferential narrow groove 88 shown in FIG. 7, the contour of the inclined portion 104 is represented by a straight line.

The connection portion 106 connects the inclined portion 104 and the narrow groove portion 94. The groove width of the connection portion 106 gradually decreases from the boundary H1 toward the narrow groove portion 94. In the cross-section of the circumferential narrow groove 88 shown in FIG. 7, the contour of the connection portion 106 is represented by an arc. An arrow Rb indicates the radius of the arc representing the contour of the connection portion 106. The arc representing the contour of the connection portion 106 is tangent to the straight line representing the contour of the inclined portion 104, at the boundary H1. The arc representing the contour of the connection portion 106 is tangent to the straight line representing the contour of the straight portion 96 of the narrow groove portion 94, at the boundary H2 between the connection portion 106 and the straight portion 96. The radius Rb of the arc representing the contour of the connection portion 106 is determined as appropriate in consideration of the shape of the inclined portion 104.

The funnel portion 102 can contribute to increasing the groove volume of the circumferential narrow groove 88 and can effectively suppress concentration of strain on the edges of the land portions 52 located on both sides of the circumferential narrow groove 88. From this viewpoint, it is preferable that the body portion 90 of the circumferential narrow groove 88 includes the funnel portion 102 including the groove opening 44M of the circumferential narrow groove 88, on the radially outer side of the narrow groove portion 94.

A length indicated by a double-headed arrow D4 is the groove depth of the funnel portion 102. The groove depth D4 is represented as the distance in the depth direction from the groove opening 44M of the circumferential narrow groove 88 to the boundary LTP between the funnel portion 102 and the narrow groove portion 94.

The ratio D4/D1 of the groove depth D4 of the funnel portion 102 to the groove depth D1 of the circumferential narrow groove 88 is preferably 0.12 or more and 0.14 or less.

When the ratio D4/D1 is set to 0.12 or more, the funnel portion 102 can effectively suppress concentration of strain on the groove opening 44M of the circumferential narrow groove 88. Occurrence of damage such as chipping at the edges of the land portions 52 is effectively suppressed. The tire 2 has good durability.

When the ratio D4/D 1 is set to 0.14 or less, the length of the narrow groove portion 94 is appropriately maintained. When the tread 4 comes into contact with a road surface and becomes deformed, the pair of wall surfaces 44S of the circumferential narrow groove 88 can come into sufficient contact with each other at the narrow groove portion 94. The tire 2 can maintain good uneven wear resistance.

As is obvious from the above description, according to the present invention, a heavy duty tire that can suppress accumulation of static electricity while maintaining uneven wear resistance is obtained.

The above-described technology capable of suppressing accumulation of static electricity while maintaining uneven wear resistance can be applied to various tires.

## Claims

1. A heavy duty tire (2, 82) comprising:
a pair of beads (10);
a carcass (12) extending on and between the pair of beads (10);
a reinforcement layer (14) located radially outward of the carcass (12); and
a tread (4) covering the reinforcement layer (14) from a radially outer side of the reinforcement layer (14), wherein
the tread (4) includes a cap layer (30) configured to come into contact with a road surface and a conducting portion (36) extending in a radial direction through the cap layer (30) and configured to connect the road surface and the reinforcement layer (14),
the tread (4) has at least three circumferential grooves (44, 48, 50) extending continuously in a circumferential direction,
the at least three circumferential grooves (44, 48, 50) demarcate at least four land portions (52) aligned in an axial direction, in the tread (4),
the at least four land portions (52) include two shoulder land portions (54) located on outermost sides in the axial direction and a plurality of main land portions (56) located between the two shoulder land portions (54),
at least one main land portion (56) among the plurality of main land portions (56) includes the conducting portion (36),
the reinforcement layer (14) includes a belt (60) including a plurality of belt plies (64, 64A, 64B, 64C) and a band (62) including a full band (70),
the plurality of belt plies (64, 64A, 64B, 64C) and the full band (70) are aligned in the radial direction,
each of the plurality of belt plies (64, 64A, 64B, 64C) includes a large number of belt cords (66, 66A, 66B, 66C) aligned with each other,
a material of each of the belt cords (66, 66A, 66B, 66C) is steel,
the full band (70) includes a helically wound band cord (72), and
a material of the band cord (72) is steel.

2. The heavy duty tire (2, 82) according to claim 1, wherein a ratio (WF/TW) of a width (WF) in the axial direction of the full band (70) to a width (TW) of the tread (4) is 0.60 or more.

3. The heavy duty tire (2, 82) according to claim 1 or 2, wherein cord ends of the full band (70) are 20 ends/50 mm or more.

4. The heavy duty tire (2, 82) according to any one of claims 1 to 3, wherein the conducting portion (36) has a width (CW) of 8.0 mm or less.

5. The heavy duty tire (2, 82) according to any one of claims 1 to 4, wherein
the plurality of belt plies (64, 64A, 64B, 64C) include a reference belt ply (BP) and a sub-reference belt ply (SBP),
the reference belt ply (BP) is a belt ply (64A, 64B) having a widest width in the axial direction among the plurality of belt plies (64, 64A, 64B, 64C),
the sub-reference belt ply (SBP) is a belt ply (64A, 64B) having a next widest width in the axial direction after the reference belt ply (BP) among the plurality of belt plies (64, 64A, 64B, 64C),
a direction of inclination of the belt cords (66A, 66B) included in the sub-reference belt ply (SBP) is opposite to a direction of inclination of the belt cords (66A, 66B) included in the reference belt ply (BP), and
the full band (70) is located between the reference belt ply (BP) and the sub-reference belt ply (SBP).

6. The heavy duty tire (2, 82) according to any one of claims 1 to 5, wherein only one main land portion (56) among the plurality of main land portions (56) includes the conducting portion (36).

7. The heavy duty tire (82) according to claim 6, wherein
a main land portion (56) located on an equator plane (EL), or a main land portion (56) closest to the equator plane (EL), among the plurality of main land portions (56), is a crown land portion (58),
when the tread (4) has three or more main land portions (56), the main land portions (56) located adjacent to the crown land portion (58) are middle land portions (84), and
a main land portion (56) in which the conducting portion (36) is provided is the crown land portion (58) or any one of the middle land portions (84).

8. The heavy duty tire (2, 82) according to any one of claims 1 to 7, further comprising a strip layer (18) formed from a crosslinked rubber, between the carcass (12) and the reinforcement layer (14), wherein
the strip layer (18) has a width (WP) in the axial direction that is substantially the same as a width (WF) in the axial direction of the full band (70).
